# DEMANDE DE BREVET EUROPEEN

(11) **EP 4 603 745 A1**
(43) Date de publication de la demande: **20.08.2025**
(21) Numéro de dépôt: 25157927.2
(22) Date de dépôt: 14.02.2025
(51) Int. Cl.: F21S 4/28, F21S 8/02, F21V 21/04, H02G 3/04, H02G 3/20, H02G 3/00

(54) **MODULE CHEMIN DE CÂBLES / SUPPORT D'ÉCLAIRAGE**

(30) Priorité: 14.02.2024 FR 2401438
(71) Demandeur: Acti - Azur Chaudronnerie Tuyauterie Industrielle, 83500 La Seyne-sur-Mer (FR)
(72) Inventeur: SEILLIER, Romuald, 83740 La Cadière-d'Azur (FR)
(74) Mandataire: Ipside

(57) **Abrégé**

L'invention concerne un module (100) offrant simultanément une solution de cheminement de câbles et un support d'éclairage intégré. Il s'étend selon un axe longitudinal et comporte :
- deux premiers logements (200) parallèles, pour recevoir des câbles,
- un deuxième logement (300), intercalé entre les deux premiers logements, pour recevoir un éclairage.

Chaque logement présente une section transversale ouverte et comporte un fond (210, 310) et deux parois longitudinales latérales (220, 240, 320) qui s'étendent de part et d'autre du fond, de sorte que le fond et les deux parois longitudinales latérales délimitent une cavité (230, 330) avec une ouverture à l'opposé du fond.

Le fond (310) du deuxième logement est disposé du côté de l'ouverture des deux premiers logements.

Une des deux parois longitudinales latérales de chacun des deux premiers logements est mobile en rotation autour d'un axe de pivotement parallèle à l'axe longitudinal, facilitant l'accès à la cavité.

## Description

### Domaine technique de l'invention

La présente invention s'inscrit dans le domaine des installations électriques. L'invention porte plus particulièrement sur un module combinant une fonction de cheminement de câbles et une fonction de support d'éclairage.

L'invention est notamment destinée à être installée dans des couloirs de bâtiments, par exemple des couloirs de métros, ou encore dans des tunnels.

### Technique antérieure

Il est connu d'utiliser des structures, dites chemins de câbles, pour permettre le guidage et le maintien de câbles (câbles électriques, câbles téléphoniques, fibres optiques...) ou analogues (conduits, canalisations...) dans des bâtiments.

Les chemins de câbles sont généralement formés par un assemblage de plusieurs tronçons mis bout à bout et fixés contre un mur ou un plafond. Les tronçons se présentent généralement sous la forme de goulottes, de section transversale en U, réalisées en tôle ou en treillis de fils métalliques.

De tels chemins de câbles n'ont pour unique fonction que de faire cheminer ces câbles ou analogues d'un point à un autre.

### Présentation de l'invention

La présente invention vise à remédier aux inconvénients précités.

A cet effet, il est proposé par la présente invention un module chemin de câbles / support d'éclairage (ou module chemin de câbles et support d'éclairage), dit module, s'étendant selon un axe longitudinal et comportant trois logements longitudinaux parallèles entre eux et attenants :
- deux logements longitudinaux destinés chacun à la réception de câbles ou analogues, dits premiers logements,
- un logement longitudinal destiné à la réception d'au moins un éclairage, dit deuxième logement,

le deuxième logement étant intercalé entre les deux premiers logements,
chacun des trois logements longitudinaux présentant une section transversale ouverte et comportant un fond et deux parois longitudinales latérales qui s'étendent de part et d'autre du fond, de sorte que le fond et les deux parois longitudinales latérales délimitent une cavité longitudinale avec une ouverture à l'opposé du fond, le fond du deuxième logement étant disposé du côté de l'ouverture des deux premiers logements,
les deux parois longitudinales du deuxième logement formant chacune une des deux parois longitudinales latérales des deux premiers logements,
l'autre paroi longitudinale latérale de chacun des deux premiers logements, dite paroi pivotante, étant montée mobile en rotation autour d'un axe de pivotement parallèle à l'axe longitudinal (X),
la paroi pivotante de chaque premier logement évoluant entre une position fermée, empêchant l'accès à la cavité longitudinale du premier logement, et une position ouverte, permettant l'accès à la cavité longitudinale du premier logement,
le deuxième logement comportant au moins un système de fixation d'un éclairage.

Le module selon l'invention propose avantageusement une double fonction. Le module permet d'une part d'acheminer des câbles et analogues tout en servant de support d'éclairage.

Un tel module présente un encombrement réduit et une installation rapide.

Un tel module peut être avantageusement installé au plafond de bâtiments, tels par exemple au plafond de couloirs de métros, ou encore dans des tunnels.

Dans des modes particuliers de réalisation, le module peut comporter en outre l'une ou plusieurs des caractéristiques suivantes, prises isolément ou selon toutes les combinaisons techniquement possibles.

Dans des modes particuliers de réalisation, le module comporte une ou plusieurs traverse(s) destinée(s) à la fixation du module au niveau d'un plafond, chaque traverse s'étendant selon un axe transversal entre les deux parois pivotantes, chaque traverse étant fixée au fond du deuxième logement.

Dans des exemples particuliers de réalisation, chaque traverse comporte, au niveau de deux extrémités, un bord tombé, chaque bord tombé étant dirigé respectivement vers la cavité longitudinale d'un premier logement.

Dans des modes particuliers de réalisation, le module comporte un ou plusieurs élément(s) de renfort configuré pour renforcer les trois logements longitudinaux, chaque élément de renfort s'étendant selon un axe transversal.

Dans des exemples particuliers de réalisation, chaque élément de renfort comporte, au niveau de deux extrémités, un bord tombé, chaque bord tombé étant dirigé respectivement vers la cavité longitudinale d'un premier logement.

Dans des modes particuliers de réalisation, le module comporte, au niveau de chaque premier logement, un ou plusieurs loquets basculants, chaque loquet basculant reliant de manière réversible le fond d'un premier logement à une extrémité d'une traverse, chaque loquet basculant évoluant entre une position de blocage, dans laquelle le loquet basculant s'étend entre le fond du premier logement et la traverse, et une position basculée dans laquelle le loquet basculant n'est plus relié à la traverse.

En position de blocage, le loquet basculant bloque localement l'accès à la cavité longitudinale du premier logement, mais participe à limiter le fléchissement du fond du premier logement sous l'effet du poids des câbles ou analogues.

En position basculée, l'accès à la cavité longitudinale du premier logement n'est plus bloqué localement par le loquet basculant. L'installation des câbles ou analogues sur toute la longueur du module est facilitée.

Dans des exemples particuliers de réalisation, chaque loquet basculant comporte un bras et un crochet, le bras étant articulé au niveau d'une première extrémité et étant muni du crochet à une seconde extrémité.

Dans des exemples particuliers de réalisation, le bras d'un loquet basculant est relié au bord tombé d'un élément de renfort et le crochet est engagé, de manière réversible, dans une encoche réalisée dans une portion de rebord de la traverse, ladite portion de rebord étant située à proximité de l'extrémité de ladite traverse. Dans des modes particuliers de réalisation, chaque premier logement comporte un mécanisme de verrouillage configuré pour maintenir la paroi pivotante dans sa position fermée.

Dans une forme particulière de réalisation, le mécanisme de verrouillage est une serrure à came batteuse. La serrure à came batteuse est préférentiellement fixée sur la paroi pivotante du premier logement et est préférentiellement agencée de sorte que la came batteuse puisse venir en engagement derrière le bord tombé d'une des traverses du module pour verrouiller la paroi pivotante en position fermée. L'invention est également relative à un ensemble comportant une pluralité de modules successifs conforme à au moins l'un de ses modes de réalisation, deux modules successifs étant reliés au moyen d'un raccord d'union d'un des deux modules, ledit raccord d'union étant disposé au niveau d'une des extrémités longitudinales dudit module.

### Brève description des figures

L'invention sera mieux comprise à la lecture de la description suivante, donnée à titre d'exemple nullement limitatif, et faite en se référant aux figures suivantes :
[Fig. 1] représente une vue en perspective d'un module en position fermée selon un mode de réalisation de l'invention ;
[Fig. 2] représente le module de la figure 1, avec une des parois pivotantes d'un des logements longitudinaux en position ouverte ;
[Fig. 3] représente le module de la figure 2, avec des loquets basculants en position basculés pour une accessibilité totale à un des logements longitudinaux ;
[Fig. 4] représente une vue de face du module de la figure 1 ;
[Fig. 5] représente une vue de face du module de la figure 2 ;
[Fig. 6] représente une vue de côté du module de la figure 2, avec la paroi pivotante représentée en transparence, illustrant des loquets basculants en position bloquée ;
[Fig. 7] représente un agrandissement d'un loquet basculant ;
[Fig. 8] représente un module d'extrémité, avec un capuchon latéral ;
[Fig. 9] représente une vue en perspective, par-dessus, d'un ensemble comportant deux modules aboutés ;
[Fig. 10] représente une vue en perspective, par-dessous, de l'ensemble de la figure 9, et illustrant le positionnement de l'éclairage.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description des modes de réalisation

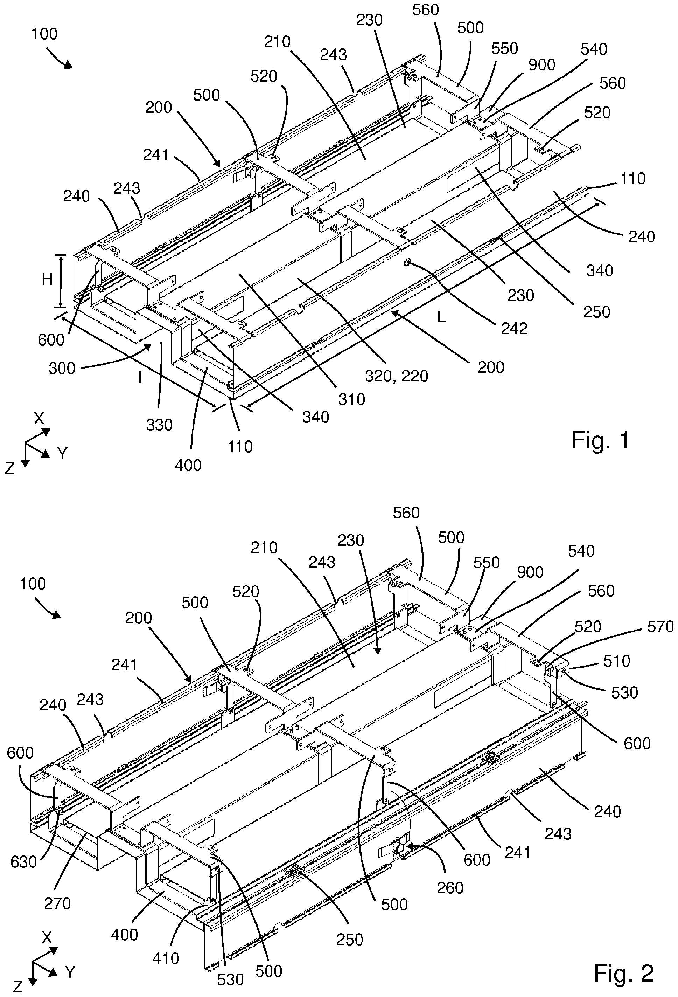

Un module chemin de câbles / support d'éclairage (ou encore module chemin de câbles et support d'éclairage), selon un exemple de réalisation est illustré sur les figures 1 à 8. Dans la suite de la description, le module chemin de câbles / support d'éclairage sera simplement dénommé module 100.

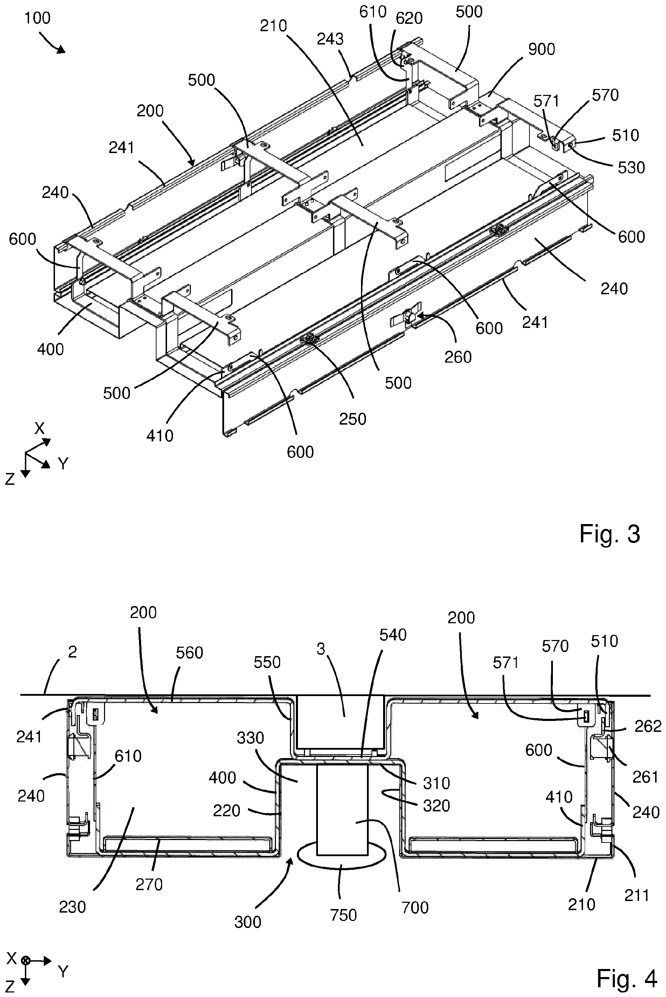

Le module 100 est préférentiellement destiné à être fixé au plafond 2 d'un bâtiment ou d'un tunnel. Dans une configuration de réalisation, le module est destiné à être fixé directement au plafond. Dans une configuration préférée de réalisation, illustrée sur les figures 1 à 8, le module est fixé au plafond 2, via une poutre longitudinale 3, elle-même fixée directement au plafond. La poutre longitudinale 3 et le plafond 2 sont uniquement représentés sur la figure 4.

Dans la suite de la description, on associera au module 100, un repère XYZ. L'indication des axes X, Y et Z permet d'aider à la compréhension du module.

L'axe X désigne un axe longitudinal du module, et correspond à une direction longitudinale dudit module. L'axe Y désigne un axe perpendiculaire à l'axe X, et correspond à une direction transversale du module. L'axe Z désigne un axe perpendiculaire aux axes X et Y. Tel qu'illustré notamment sur la figure 1, l'axe Z désigne un axe vertical. Ainsi, de manière résumée, le module 100 présente une longueur L selon l'axe X, une largeur l selon l'axe Y, et une hauteur H selon l'axe Z. Tels qu'utilisés dans la description, les termes « horizontal », « vertical », « gauche », « droite », « haut » « bas », « dessus », « dessous », « inférieur », « supérieur » etc. se réfèrent, sauf précision contraire, à l'orientation du module dans les figures.

Le module 100 comporte au moins trois logements longitudinaux 200, 300 s'étendant chacun selon l'axe X.

De manière préférentielle, et tel qu'illustré sur les figures 1 à 5, le module 100 comporte uniquement trois logements longitudinaux.

Les trois logements longitudinaux 200, 300 sont préférentiellement parallèles entre eux et attenants, comme illustré sur ces figures.

Plus précisément, le module 100 comporte :
- deux logements longitudinaux destinés chacun à la réception de câbles ou analogues ; ces logements longitudinaux, présentant la même fonction, seront dénommés par la suite premiers logements 200,
- un logement longitudinal destiné à la réception d'au moins un éclairage 750 ; ce logement longitudinal sera dénommé par la suite deuxième logement 300. Les premiers logements 200 forment avantageusement des chemins de câbles pour permettre le guidage et le maintien des câbles et analogues (non représentés sur les figures).

Par câble ou analogue, on entend tout élément longiligne permettant notamment de relier électriquement, optique ou fluidiquement deux éléments entre eux, tel que par exemple un câble ou un faisceaux de câbles, électriques, optiques ou autres, une gaine, une canalisation pour fluide...

Les premiers logements 200 sont préférentiellement de même forme et dimension. Ils s'étendent sur toute la longueur L du module, entre deux extrémités longitudinales 110 dudit module.

Chaque premier logement 200 présente une section transversale ouverte et comporte un fond 210 et deux parois longitudinales latérales 220,240 qui s'étendent de part et d'autre du fond, de sorte que le fond 210 et les deux parois longitudinales latérales 220,240 de chaque premier logement 200 délimitent une cavité longitudinale 230 avec une ouverture à l'opposé du fond 210, comme illustré sur les figure 1 à 3.

Par section transversale, on entend une section dans le plan YZ.

Les fonds 210 des premiers logements 200 sont préférentiellement coplanaires et s'étendent dans un plan XY.

Le deuxième logement 300 est intercalé entre les deux premiers logements 200. Il s'étend sur toute la longueur L du module 100, entre les deux extrémités longitudinales 110 dudit module.

Le deuxième logement 300 présente une section transversale ouverte et comporte un fond 310 et deux parois longitudinales latérales 320 qui s'étendent de part et d'autre du fond 310, de sorte que le fond 310 et les deux parois longitudinales latérales 320 du deuxième logement 300 délimitent une cavité longitudinale 330 avec une ouverture à l'opposé du fond 310.

Le deuxième logement 300 est disposé de manière inversée par rapport aux deux premiers logements 200. En d'autres termes, le fond 310 du deuxième logement 300 est disposé du côté de l'ouverture des deux premiers logements 200. Le fond 310 du deuxième logement 300 s'étend préférentiellement dans un plan parallèle à celui des fonds 210 des premiers logements 200.

Dans la configuration où le module 100 est fixé directement au plafond 2, le module 100 est agencé de sorte que les ouvertures des premiers logements 200 et le fond 310 du second logement 300 sont en regard du plafond 2.

Dans la configuration où le module 100 est fixé au plafond 2 via la poutre longitudinale 3, les ouvertures des premiers logements 200 sont en regard du plafond 2, et le fond 310 du second logement 300 est en regard de la poutre longitudinale 3.

Les premiers et deuxième logements 200, 300 sont attenants au niveau de leurs parois longitudinales latérales 220, 240 320.

De manière préférée, et tel qu'illustré sur les figures 1 à 5, les deux parois longitudinales latérales 320 du deuxième logement 300 forment chacune une des deux parois longitudinales latérales 220 des deux premiers logements 200. En d'autres termes, une paroi longitudinale latérale 320 du deuxième logement 300 forme une des deux parois longitudinales latérales 220 d'un des deux premiers logements 200 et l'autre paroi longitudinale latérale 320 du deuxième logement 300 forme une des deux parois longitudinales latérales 220 de l'autre des deux premiers logements 200.

Les parois longitudinales latérales 320 du deuxième logement 300 (et donc, les parois longitudinales latérales 220 susnommées des deux premiers logements 200) sont des parois solidairement fixes par rapport au fond 210 des deux premiers logements 200 et au fond 310 du deuxième logement 300. Par le terme solidairement fixe, on entend qu'il n'y aucun degré de liberté entre les parois longitudinales latérales 320 du deuxième logement 300 et les fonds 210, 310 des deux premiers logements 200 et du deuxième logement 300.

Dans l'exemple préféré de réalisation décrit en lien avec les figures, les parois longitudinales latérales 320 du deuxième logement 300 sont parallèles entres elles et perpendiculaires au fond 310 dudit deuxième logement 300.

Dans des variantes de réalisation, non représentées sur les figures, les parois longitudinales latérales 320 du deuxième logement 300 sont divergentes, c'est-à-dire qu'elles tendent à s'écarter l'une de l'autre depuis le fond 320 du deuxième logement 300 en direction de l'ouverture du deuxième logement 300, ou convergentes, c'est-à-dire qu'elles tendent à se rapprocher l'une de l'autre depuis le fond 320 du deuxième logement 300 en direction de l'ouverture dudit deuxième logement.

De manière similaire, et toujours en lien avec les figures, les parois longitudinales latérales 220, 240 des premiers logements 200 sont parallèles entres elles et perpendiculaires au fond 210 desdits premiers logements.

Dans des variantes de réalisation, pour un ou les deux premiers logements 200, les parois longitudinales latérales 220, 240 sont divergentes, c'est-à-dire qu'elles tendent à s'écarter l'une de l'autre depuis le fond 210 du premier logement 200 en direction de l'ouverture dudit premier logement, ou convergentes, c'est-à-dire qu'elles tendent à se rapprocher l'une de l'autre depuis le fond 210 du premier logement 200 en direction de l'ouverture dudit premier logement.

De préférence, et comme illustré sur les figures 1 à 3, le fond 210 des premiers logements 200, les parois longitudinales latérales 320 et le fond 310 du deuxième logement 300 sont réalisés d'une seule pièce, par exemple par découpage laser puis pliage d'un flan de tôle.

Dans un exemple préféré de réalisation, et tel qu'illustré sur les figures 1 à 3, le fond 210 des premiers logements 200, les parois longitudinales latérales 320 et le fond 310 du deuxième logement 300 forment un profil transversal en oméga majuscule.

L'autre paroi longitudinale latérale 240 de chacun des deux premiers logements 200, c'est-à-dire celle non liée au fond 310 du deuxième logement 300, est dite paroi pivotante et est montée mobile en rotation autour d'un axe de pivotement parallèle à l'axe X, comme illustré sur les figures 1 à 3.

La paroi pivotante 240 de chaque premier logement 200 évolue entre une position fermée et une position ouverte. En position fermée, la paroi pivotante 240 du premier logement 200 est configurée pour empêcher l'accès à la cavité longitudinale 230 du premier logement 200. En position ouverte, la paroi pivotante 240 est configurée pour permettre l'accès à la cavité longitudinale 230 du premier logement 200.

Il est à noter que cet accès à la cavité longitudinale 230 du premier logement 200 est le seul accès possible, lorsque le module 100 est installé au plafond 2, comme il sera décrit ultérieurement.

Dans l'exemple de la figure 1, la paroi pivotante 240 du premier logement 200 situé sur la droite de la figure 1 est en position fermée. Dans l'exemple des figures 2 et 3, la paroi pivotante 240 du même premier logement 200 est en position ouverte.

Chaque paroi pivotante 240 d'un premier logement 200 est apte à pivoter selon une plage angulaire d'au moins 90°, préférentiellement de 180°, comme illustré sur les figures 2 et 3.

La paroi pivotante 240 de chaque premier logement 200 est préférentiellement assemblée au fond 210 du premier logement 200 par une liaison pivot.

Dans un exemple préféré de réalisation, la liaison pivot peut être réalisée par une ou plusieurs charnières 250. Dans l'exemple non limitatif des figures 1 à 3, pour la paroi pivotante 240 du premier logement 200 situé sur la droite de ces figures, deux charnières 250 sont représentées.

Le nombre de charnières 250 par paroi pivotante 240 dépend notamment de la longueur du module 100.

D'autres moyens qu'une charnière 250 pour permettre le pivotement des parois pivotantes 240 des premiers logements 200 sont également envisageables.

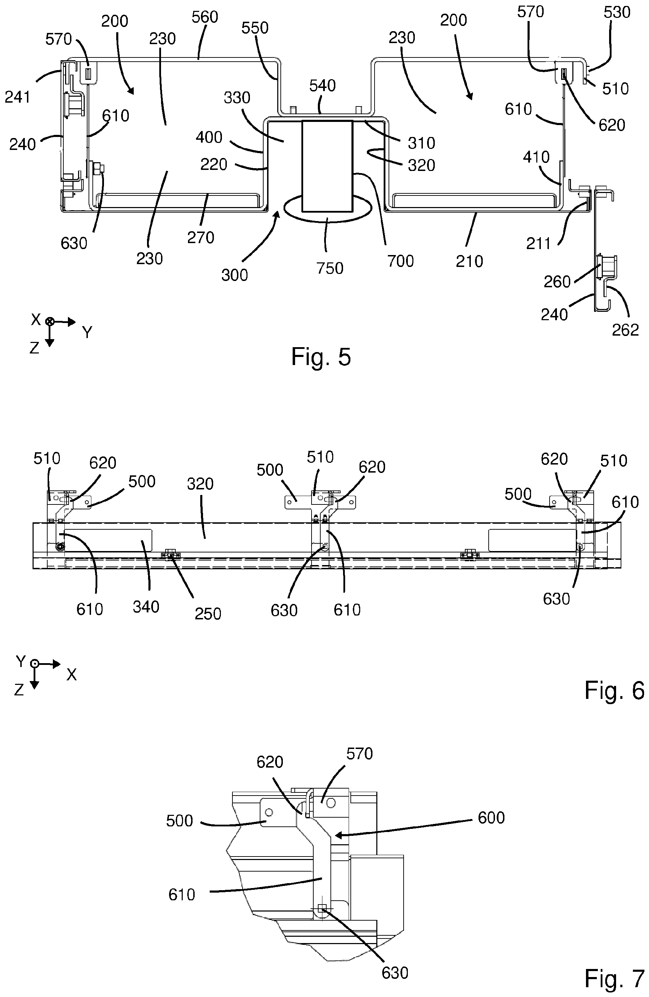

Dans une forme préférée de réalisation d'un premier logement 200, le fond 210 du premier logement 200 présente, du côté de la paroi pivotante 240, un rebord longitudinal 211 replié vers la cavité longitudinale 230 et formant préférentiellement un profil en C. En parallèle, la paroi pivotante 240 dudit premier logement présente, en section transversale, un profil en C, comme illustré de manière plus visible sur les figures 4 et 5. La paroi pivotante 240 dudit premier logement est agencée de sorte que, lorsque ladite paroi pivotante est en position fermée, le profil en C de la paroi pivotante est tourné vers la cavité longitudinale 230. La paroi pivotante 240 est reliée au rebord longitudinal 211 du fond 210 du premier logement 200 par les charnières 250.

De préférence, les parois pivotantes 240 des deux premiers logements 200 sont réalisées par exemple par découpage laser puis pliage d'un flan de tôle.

De préférence, les premiers logements 200 et le deuxième logement 300 (parois longitudinales latérales, fond) sont réalisés en matériau métallique. Il est également envisageable de les réaliser dans d'autres matériaux, tel que par exemple un matériau composite.

Dans un mode préféré de réalisation, le module 100 comporte un ou plusieurs éléments de renfort 400. Chaque élément de renfort 400 est destiné avantageusement à renforcer localement la rigidité des trois logements longitudinaux 200, 300, notamment pour supporter le poids des câbles ou analogues.

Chaque élément de renfort 400 est disposé selon l'axe Y et s'étend préférentiellement sur la largueur l du module 100.

Le nombre d'éléments de renfort 400 dépend notamment de la longueur L du module 100.

Dans l'exemple non limitatif des figures 1 à 3, trois éléments de renfort 400 sont représentés par module 100. Deux éléments de renfort 400 sont par exemple disposés au niveau des deux extrémités longitudinales 110 du module 100 et un élément de renfort 400 est disposé à mi-longueur du module.

Dans une forme de réalisation, chaque élément de renfort 400 présente une forme adaptée pour venir épouser la forme du fond 210 des deux premiers logements 200, des parois longitudinales latérales 320 et du fond 310 du deuxième logement 300. Par exemple, et comme illustré sur les figures 1 à 3, lorsque le fond 210 des premiers logements 200, des parois longitudinales latérales 320 et du fond 310 du deuxième logement 300 forment un profil transversal en oméga majuscule, les éléments de renforts 400 présentent un profil en oméga majuscule.

De préférence, comme illustré sur les figures 1 à 5, chaque élément de renfort 400 présente, au niveau de ses deux extrémités, un bord tombé 410. Chaque bord tombé 410 est dirigé respectivement vers la cavité longitudinale 230 d'un premier logement 200.

De préférence, les éléments de renfort 400 sont réalisés par exemple par découpage laser puis pliage d'un flan de tôle.

De préférence, les éléments de renfort 400 sont réalisés dans le même matériau que les trois logements longitudinaux 200, 300, par exemple un matériau métallique. Les éléments de renforts 400 sont par exemple maintenus par collage auxdits logements longitudinaux.

Dans un mode préféré de réalisation, le module 100 comporte une ou plusieurs traverse(s) 500 destinée(s) avantageusement à la fixation dudit module au plafond 2. Chaque traverse 500 est disposée selon l'axe Y, et s'étend préférentiellement sur la largueur l du module, entre les deux parois pivotantes 240.

Le nombre de traverses 500 dépend notamment de la longueur L du module.

Dans l'exemple non limitatif des figures 1 à 3, trois traverses 500 sont représentées par module. Deux traverses, dites d'extrémités, sont par exemple disposées au niveau des deux extrémités longitudinales 110 du module 100 et une traverse, dite centrale, est disposée à mi-longueur du module 100.

Dans un exemple préféré de réalisation, le nombre de traverses 500 équivaut au nombre des éléments de renfort 400. Les traverses 500 sont préférentiellement disposées, sur le module 100, au niveau des éléments de renforts 400.

Chaque traverse 500 est fixée, par exemple par vissage, au fond 310 du deuxième logement 300.

Chaque traverse 500 comporte préférentiellement des orifices traversants 520 pour permettre avantageusement le passage d'éléments de fixation (non représentés sur les figures) tels que par exemple des vis, pour fixer le module 100 au plafond 2. De préférence, chaque traverse 500 présente, au niveau de ses deux extrémités, un bord tombé 510. Chaque bord tombé 510 est dirigé respectivement vers la cavité longitudinale 230 d'un premier logement 200. Chaque paroi pivotante 240 d'un premier logement 200 vient reposer contre un des deux bords tombés 510, lorsque les parois pivotantes 240 sont en position fermée. De préférence, et comme illustré sur la figure 4, chaque paroi pivotante 240 vient reposer sur un bord tombé 510 d'une traverse 500, au niveau d'un bord longitudinal libre 241 de ladite paroi pivotante. Le bord longitudinal libre 241 d'une paroi pivotante 240 est le bord longitudinal non lié au fond 210 du premier logement 200.

Dans un mode préféré de réalisation, chaque traverse 500 comporte, au niveau de chaque bord tombé, un élément magnétique 530. Chaque élément magnétique 530 est configuré pour interagir magnétiquement par attraction avec une paroi pivotante 240 d'un premier logement 200. Lesdits éléments magnétiques sont ainsi avantageusement destinés à retenir les parois pivotantes, lorsqu'elles sont en position fermée. Dans ce mode de réalisation, les parois pivotantes 240 sont réalisées en matériau métallique, tel que par exemple de l'acier, et les traverses 500 sont réalisées en matériau métallique amagnétique, tel que par exemple de l'aluminium.

Dans une variante de réalisation, chaque traverse 500 comporte, au niveau de chaque bord tombé, les éléments magnétiques 530 sont fixés sur les parois pivotantes 240. Chaque élément magnétique 530 est configuré pour interagir magnétiquement par attraction avec une traverse 500, au niveau d'un bord tombé. Dans cette variante de réalisation, les traverses 500 sont réalisées en matériau métallique, tel que par exemple de l'acier, et les parois pivotantes 240 sont réalisées en matériau métallique amagnétique, tel que par exemple de l'aluminium. Dans cette variante de réalisation, les éléments magnétiques 530 permettent, outre de retenir les parois pivotantes lorsqu'elles sont en position fermée, de garantir l'alignement des parois pivotantes 240.

Dans la configuration où le module 100 est fixé directement au plafond 2, chaque traverse 500 peut présenter un profil plan.

Dans la configuration où le module 100 est fixé au plafond 2 via la poutre longitudinale 3, comme illustré sur la figure 4, chaque traverse 500 présente un profil en oméga majuscule inversé. Chaque traverse 500 comporte une âme centrale 540, prolongée de part et d'autre par une partie dite coudée 550, elle-même prolongée par une aile 560. Les ailes 560 de chaque traverse 500 sont préférentiellement coplanaires et s'étendent dans un plan parallèle à celui de l'âme centrale 540. La concavité de l'oméga (c'est-à-dire l'espace compris entre l'âme centrale 540 et les parties coudées 550 de la traverse 500) de chaque traverse 500 est destinée à recevoir la poutre longitudinale 2. Les ailes 560 de chaque traverse 500 sont destinées à être fixées au plafond 2 et les parties coudées 550 sont destinées à être fixées sur la poutre longitudinale 3.

Les ailes 560 de chaque traverse comportent préférentiellement des orifices traversants pour permettre avantageusement le passage d'éléments de fixation tels que par exemple des vis, pour fixer le module 100 au plafond 2. Les parties coudées 550 de la traverse 500 comportent des orifices traversants pour permettre avantageusement le passage d'éléments de fixation tels que par exemple des vis, pour fixer le module 100 à la poutre longitudinale 3.

Dans cette configuration, les parois pivotantes 240 présentent alors une hauteur telle qu'elles prennent en compte à la fois la hauteur du deuxième logement 300 et la hauteur de la poutre longitudinale 3.

Dans un mode préféré de réalisation, chaque premier logement 200 peut comporter un mécanisme de verrouillage 260 de la porte pivotante 240 en position fermée.

Dans un exemple préféré de réalisation d'un mécanisme de verrouillage 260, comme illustré sur les figures 4 et 5, le mécanisme de verrouillage 260 peut comporter une serrure 261 à came batteuse 262. La serrure 261 à came batteuse 262 est préférentiellement fixée sur la paroi pivotante 240 du premier logement 200. La serrure 261 à came batteuse 262 est agencée de sorte que la came batteuse 262 puisse venir en engagement derrière le bord tombé 510 d'une des traverses 500 du module 100 pour verrouiller la paroi pivotante 240 en position fermée. Dans l'exemple non limitatif des figures 2 à 5, la serrure 261 à came batteuse 262 est disposée au niveau de la traverse centrale 500 de sorte que la came batteuse 262 puisse venir en engagement derrière le bord tombé 510 de la traverse centrale 500. Le déverrouillage de la paroi pivotante 240, et en conséquence la possibilité, pour un utilisateur, de faire pivoter la paroi pivotante 240 de la position fermée à la position ouverte, est réalisable par exemple au moyen d'une clé (non représentée) correspondant à cette serrure 261.

La serrure 261 à came batteuse 262 est disposée, lorsque la paroi pivotante 240 est en position fermée, du côté de la cavité longitudinale 230 du premier logement 200.

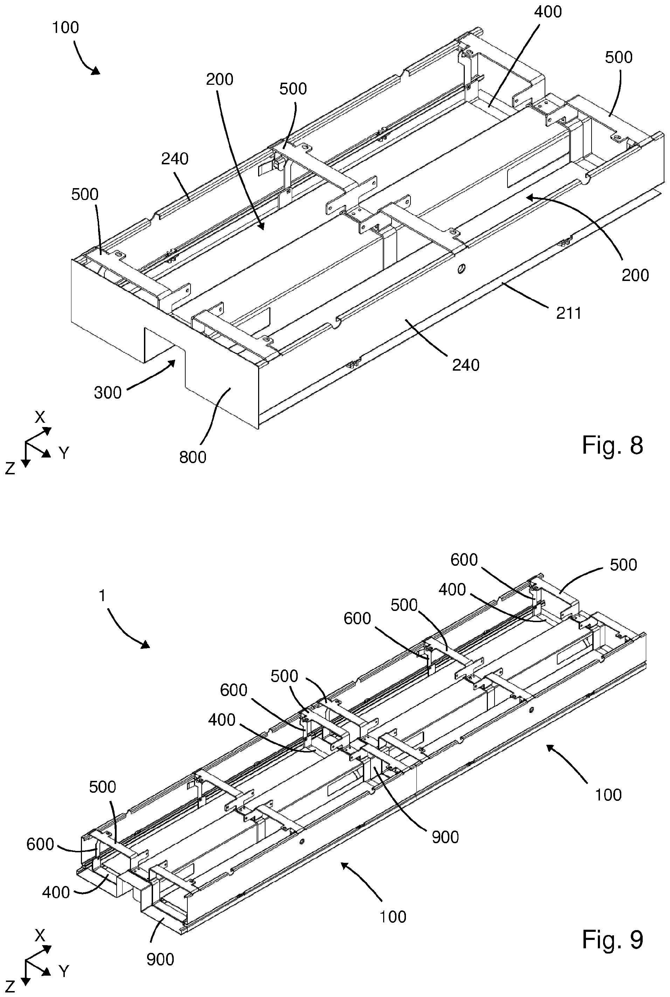

Dans ce cas, et comme illustré sur les figures 1 et 8, la paroi pivotante 240 comporte une lumière 242 en regard de la serrure 261 pour permettre l'accès de la clé à ladite serrure.

Les parois longitudinales latérales d'un premier logement sont ainsi préférentiellement maintenues en position fermée par un mécanisme de verrouillage 260 et/ou par les éléments magnétiques 530 situés sur les bords tombés de chaque traverse 500.

Il est cependant à noter que, lorsque les parois longitudinales latérales d'un premier logement sont agencées de manière convergente entre elles, le recours à un mécanisme de verrouillage 260 et/ou aux éléments magnétiques 530 pour les maintenir en position fermée peut être optionnel.

Dans un mode préféré de réalisation, chaque paroi pivotante 240 d'un premier logement 200 peut comporter, au niveau de son bord longitudinal libre 241, une ou plusieurs encoches 243. Chaque encoche 243 est dimensionnée pour permettre l'introduction d'un doigt de l'utilisateur, en vue de pouvoir effectuer une traction sur la paroi pivotante 240 afin de la passer de la position fermée à la position ouverte et d'accéder à la cavité longitudinale 230 dudit premier logement. Cette action (passage de la position fermée à la position ouverte) n'est possible qu'une fois le déverrouillage de la paroi pivotante 240 effectué.

Dans l'exemple non limitatif des figures 1 à 3, chaque paroi pivotante 240 comporte deux encoches 243.

Dans un mode de réalisation, le module 100 comporte, au niveau de chaque premier logement 200, un ou plusieurs loquet(s) basculant(s) 600 agencé(s) pour limiter le fléchissement du fond 210 du premier logement 200 sous l'effet du poids des câbles et analogue. Chaque loquet basculant 600 est avantageusement destiné à lier de manière réversible le fond 210 d'un premier logement 200 et une traverse 500, préférentiellement au niveau d'une extrémité de ladite traverse.

Le nombre de loquets basculants 600 correspond au double du nombre de traverses 500. Ainsi, dans l'exemple illustré sur les figures 1 à 3, trois loquets basculants 600 sont représentés par premier logement 200, un pour chaque traverse 500.

Dans une forme de réalisation, comme illustré sur les figures 6 et 7, chaque loquet basculant 600 comporte un bras 610 et un crochet 620. Le bras 610 est articulé au niveau d'une première extrémité et est muni, à une seconde extrémité, du crochet 620. Dans la figure 6, qui est une vue de côté du module, la paroi pivotante 240 du premier logement 200 est transparente et représentée en trait pointillé, pour mettre en évidence les trois loquets basculants 600.

Le bras 610 est lié, au niveau de la première extrémité, au fond 210 du premier logement 200. De préférence, le bras 610 est relié au bord tombé 410 d'un élément de renfort 400.

Le bras 610 est mobile en rotation autour d'un axe parallèle à l'axe Y, comme illustré sur les figures 2 et 3.

Le crochet 620 est destiné à venir s'engager dans une encoche 571 réalisée dans une portion de rebord 570 de la traverse 500 associée, ladite portion de rebord 570 étant réalisée à proximité de l'extrémité de ladite traverse, et donc à proximité du bord tombé 510.

Chaque loquet basculant 600 évolue entre une position de blocage et une position basculée.

En position de blocage, comme illustré sur la figure 2, le loquet basculant 600 s'étend entre le fond 210 du premier logement 200 et la traverse 500, sensiblement selon l'axe Z. Dans cette position de blocage, Le bras 610 est lié au fond 210 du premier logement 200 et le crochet 620 est engagé dans l'encoche 571. Le loquet basculant 600 bloque localement l'accès à la cavité longitudinale 230 du premier logement 200.

En position basculée, comme illustré sur la figure 3, le loquet basculant 600 est configuré pour permettre complètement l'accès à la cavité longitudinale 230 du premier logement 200, facilitant l'installation des câbles sur toute la longueur du module. Dans cette position basculée, le loquet basculant 600 n'est plus relié à la traverse 500. Le crochet 620 est retiré de l'encoche 571, le loquet basculant 600 est basculé vers le fond 210 du premier logement 200, après une rotation de sensiblement 90°, autour d'un axe parallèle à l'axe Y.

Dans un exemple de réalisation, chaque loquet basculant 600 est fixé au bord tombé 410 de l'élément de renfort 400 par un élément de serrage 630 pour bloquer en rotation le loquet basculant 600. Le loquet basculant 600 et le bord tombé 410 de l'élément de renfort 400 comportent des orifices de passage pour l'élément de serrage.

Dans une forme de réalisation, l'élément de serrage 630 est de type boulon (c'est-à-dire un ensemble vis et écrou), par exemple un boulon à tête ronde et à collet carré (connu sous l'acronyme boulon TRCC). Le boulon TRCC est situé dans l'axe de rotation du loquet basculant 600. Le boulon TRCC est agencé de sorte que la tête de la vis est disposée du côté de la cavité longitudinale 230 du premier logement 200. Les orifices de passage du loquet basculant et du bord tombé de l'élément de renfort présentent une section carrée dimensionnée pour coopérer avec le boulon TRCC. Cette forme géométrique est destinée à maintenir en position bloquée la tête de la vis lors du serrage, évitant l'utilisation d'un outil supplémentaire pour maintenir en position la tête de la vis pendant le serrage de l'écrou.

Lorsque le loquet basculant 600 est en position bloquée, l'écrou est serré de sorte que le collet carré de la vis est dans les orifices du loquet basculant 600 et du bord tombé 410 de l'élément de renfort 400.

Pour passer de la position de blocage à la position basculée, l'écrou du boulon TRCC est desserré jusqu'au désengagement du collet carré des orifices du loquet basculant 600 et du bord tombé 410 de l'élément de renfort 400, désolidarisant le loquet basculant 600 du bord tombé 410 de l'élément de renfort 400, et permettant ainsi audit loquet basculant de pivoter vers la position basculée, par rotation.

Dans un mode préféré de réalisation, chaque premier logement 200 comporte un élément 270 favorisant l'accrochage des câbles et analogues dans sa cavité longitudinale 230.

Dans des formes de réalisation, comme illustré sur les figures 2 et 3, l'élément 270 est une tôle perforée ou un treillis de fils soudés, présentant, en section transversale, un profil en C, avec les deux rebords du profil en C reposant sur le fond du premier logement. L'élément 270 est assemblé au fond du premier logement, via les deux rebords du profil en C, par exemple par collage. Ainsi, l'élément 270 permet de fixer les câbles dans la cavité longitudinale 230 du premier logement 200, à l'aide de serre-câbles, aussi appelé colliers « colson », « rilsan » ou « ty-rap^{®} » (non représentés sur les figures).

Dans un mode préféré de réalisation, comme illustré sur la figure 4, le module 100 comporte, dans le deuxième logement 300, au moins un système de fixation 700 d'un éclairage 750.

Le système de fixation 700 est adapté au type d'éclairage 750 à installer.

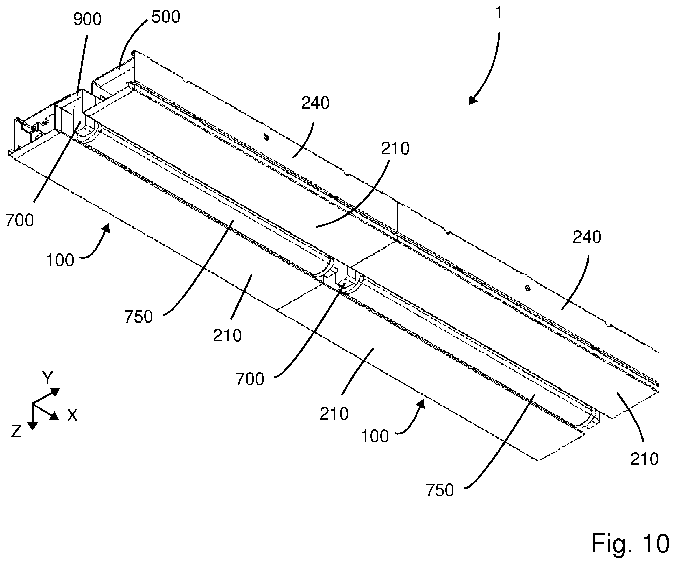

Dans une forme de réalisation, comme illustré sur la figure 10, l'éclairage 750 est un éclairage de type tube fluorescent, tube néon, ou encore tube à LEDs, sans que ce soit limitatif de l'invention.

Dans un mode préféré de réalisation, le module 100 comporte, au niveau de chaque paroi longitudinale latérale 320 du deuxième logement 300, au moins une ouverture 340 pour permettre l'accès, depuis chaque premier logement 200, audit deuxième logement.

Une ouverture 340 est avantageusement disposée au niveau de chaque système de fixation 700. Il y a donc autant d'ouvertures 340 dans chaque paroi longitudinale latérale 320 du deuxième logement 300 que de systèmes de fixation 700 dans le deuxième logement 300. Chaque ouverture 340 permet ainsi avantageusement le passage des câbles électriques pour l'alimentation de l'éclairage 750.

Dans un mode préféré de réalisation, comme illustré sur la figure 8, le module 100 comporte, au niveau d'une de ces extrémités longitudinales 110, un capuchon latéral 800. Un tel capuchon latéral 800 est destiné à obturer l'extrémité longitudinale 110 du module 100 et à empêcher l'accès à l'intérieur des premiers logements 200, lorsque le module 100 est en place au plafond 2, et que son extrémité longitudinale 110 n'est pas accolée à une paroi, ni reliée à un autre module. Le module avec un capuchon latéral 800 est un module dit d'extrémité. Le capuchon latéral 800 est fixé à une extrémité longitudinale 110 du module 100, de préférence par soudure.

Le module 100 est configuré pour être assemblé avec une pluralité d'autres modules 100 pour former un ensemble 1.

Dans un exemple de réalisation, comme illustré sur les figures 1 à 3, pour assembler deux modules 100 successifs et garantir l'alignement des modules entre eux, chaque module 100 comporte, à une seule de ses deux extrémités longitudinales 110, un raccord d'union 900.

Dans un exemple de réalisation, le raccord d'union 900 est un raccord d'union droite. Un tel raccord d'union droite permet avantageusement d'assembler deux modules 100 bout à bout, c'est-à-dire longitudinalement, en liant les extrémités longitudinales 110 des modules 100. Les axes X de chaque module 100 sont alors confondus.

Le raccord d'union droite se présente par exemple sous la forme d'une pièce présentant une forme adaptée pour venir épouser la forme du fond 210 des premiers logements 200, des parois longitudinales latérales 320, 340 et du fond 310 du deuxième logement 300.

Par exemple, et comme illustré sur les figures 1 à 3, lorsque le fond 210 des premiers logements 200, des parois longitudinales latérales 320, 340 et du fond 310 du deuxième logement 300 forment un profil transversal en oméga majuscule, le raccord d'union droite 900 présente un profil en oméga majuscule.

Le raccord d'union droite 900 est assemblé, en partie, à une des extrémités longitudinales 110 du module 100, et s'étend au-delà de l'extrémité longitudinale dudit module.

Le raccord d'union droite 900 est préférentiellement assemblé par collage à l'une des extrémités longitudinales 110 du module 100.

Lors de l'assemblage du module 100 avec un autre module 100, les deux modules 100 sont aboutés, au niveau d'une de leurs extrémités 110, et le raccord d'union droite 900 d'un des modules 100 assure la liaison avec l'autre module 100, garantissant l'alignement entre lesdits deux modules.

A titre d'exemple illustratif non limitatif, les figures 9 et 10 illustrent, en vue de dessus et en vue de dessous, un ensemble 1 comportant deux modules 100 assemblés au niveau de leurs extrémités longitudinales 110.

L'assemblage de plusieurs modules successifs les uns à la suite des autres permet avantageusement de créer à la fois deux chemins de câbles et un éclairage continus sur toute la longueur du couloir ou du tunnel. Une fois tous les modules fixés au plafond, l'utilisateur n'a plus qu'à placer tous les loquets basculants de chaque module en position basculée pour accéder intégralement aux cavités longitudinales desdits modules, sans la moindre gène, et installer les câbles et analogues dans ces cavités longitudinales.

## Revendications

1. Module chemin de câbles et support d'éclairage, dit module (100), s'étendant selon un axe longitudinal (X) et comportant trois logements longitudinaux parallèles entre eux et attenants :
- deux logements longitudinaux destinés chacun à la réception de câbles ou analogues, dits premiers logements (200),
- un logement longitudinal destiné à la réception d'au moins un éclairage, dit deuxième logement (300),
le deuxième logement (300) étant intercalé entre les deux premiers logements (200) et comportant au moins un système de fixation (700) d'un éclairage (750),
chacun des trois logements longitudinaux présentant une section transversale ouverte et comportant un fond (210, 310) et deux parois longitudinales latérales (220, 240, 320) qui s'étendent de part et d'autre du fond (210, 310), de sorte que le fond (210, 310) et les deux parois longitudinales latérales (220, 240, 320) délimitent une cavité longitudinale (230, 330) avec une ouverture à l'opposé du fond,
le fond (310) du deuxième logement (300) étant disposé du côté de l'ouverture des deux premiers logements (200),
les deux parois longitudinales du deuxième logement (320) formant chacune une des deux parois longitudinales latérales (220) des deux premiers logements (200),
**caractérisé en ce que** l'autre paroi longitudinale latérale de chacun des deux premiers logements (200), dite paroi pivotante (240), est montée mobile en rotation autour d'un axe de pivotement parallèle à l'axe longitudinal (X),
la paroi pivotante (240) de chaque premier logement (200) évoluant entre une position fermée, empêchant l'accès à la cavité longitudinale (230) dudit premier logement, et une position ouverte, permettant l'accès à la cavité longitudinale (230) dudit premier logement,
**en ce que** le module comporte une ou plusieurs traverse(s) (500) destinée(s) à la fixation du module au niveau d'un plafond (2), chaque traverse (500) s'étendant,
selon un axe transversal (Y), entre les deux parois pivotantes (240), chaque traverse (500) étant fixée au fond (310) du deuxième logement (300),
et **en ce que** le module comporte, au niveau de chaque premier logement (200), un ou plusieurs loquets basculants (600), chaque loquet basculant (600) reliant de manière réversible le fond (210) d'un premier logement (200) à une extrémité d'une traverse (500), chaque loquet basculant (600) évoluant entre une position de blocage, dans laquelle le loquet basculant s'étend entre le fond (210) du premier logement (200) et la traverse (500), et une position basculée dans laquelle le loquet basculant (600) n'est plus relié à la traverse (500).

2. Module (100) selon la revendication précédente dans lequel chaque traverse (500) comporte, au niveau de deux extrémités, un bord tombé (510), chaque bord tombé étant dirigé respectivement vers la cavité longitudinale (230) d'un premier logement (200).

3. Module (100) selon l'une des revendications précédentes comportant un ou plusieurs élément(s) de renfort (400) des trois logements longitudinaux (200, 300), chaque élément de renfort (400) s'étendant selon un axe transversal (Y).

4. Module (100) selon la revendication précédente dans lequel chaque élément de renfort (400) comporte, au niveau de deux extrémités, un bord tombé (410), chaque bord tombé (410) étant dirigé respectivement vers la cavité longitudinale (230) d'un premier logement (200).

5. Module (100) selon l'une des revendications précédentes dans lequel chaque loquet basculant (600) comporte un bras (610) et un crochet (620), le bras (610) étant articulé au niveau d'une première extrémité et étant muni du crochet (620) à une seconde extrémité.

6. Module (100) selon la revendication 5 et la revendication 4 dans lequel le bras (610) d'un loquet basculant (600) est relié au bord tombé (410) d'un élément de renfort (400) et le crochet (620) est engagé, de manière réversible, dans une encoche (571) réalisée dans une portion de rebord (570) de la traverse (500), ladite portion de rebord étant située à proximité de l'extrémité de ladite traverse.

7. Module (100) selon l'une des revendications précédentes dans lequel chaque premier logement (200) comporte un mécanisme de verrouillage (260) configuré pour maintenir la paroi pivotante (240) dans sa position fermée.

8. Ensemble (1) comportant une pluralité de modules (100) successifs conformes à l'une des revendications 1 à 7, deux modules (100) successifs étant reliés au moyen d'un raccord d'union (900) d'un des deux modules, ledit raccord d'union étant disposé au niveau d'une des extrémités longitudinales (110) dudit module.
